# EUROPÄISCHE PATENTANMELDUNG

(11) **EP 2 586 315 A2**
(43) Veröffentlichungstag der Anmeldung: **01.05.2013**
(21) Anmeldenummer: 12190378.5
(22) Anmeldetag: 29.10.2012
(51) Int. Cl.: A23B 4/16

(54) **Schutzgas zum Verpacken von Fleisch- und Wurstwaren**

(30) Priorität: 29.10.2011 DE 102011122769
(71) Anmelder: Messer Austria GmbH, 2352 Gumpoldskirchen (AT)
(72) Erfinder: Laimer, Walter, 7210 Mattersburg (AT)
(74) Vertreter: Münzel, Joachim R.

(57) **Zusammenfassung**

Zum Verhindern der Vergrauung von Fleisch oder Wurstwaren bei der Lagerung unter modifizierter Atmosphäre wird vorgeschlagen, das Fleisch bzw. die Wurstwaren unter einem sauerstofffreien Schutzgas zu lagern, das aus 40 bis 80 Vol.-% Argon, 20 Vol.-% bis 40 Vol.-% Kohlendioxid, Rest Stickstoff, besteht.

## Beschreibung

Die Erfindung betrifft ein Schutzgas zum Verpacken von Fleisch oder Wurstwaren unter modifizierter Atmosphäre sowie ein Verfahren zum Verhindern der Vergrauung von Fleisch- oder Wurstwaren.

Der Trend zu Fertigverpackungen für Wurstwaren und Fleischprodukte ist ein wachsender Markt. Der Verbraucher wünscht frische, einfach handhabbare Produkte in hoher Qualität und gutem Geschmack. Neben diesen Faktoren beeinflussen vor allem Aussehen und Farbe die Kaufentscheidung der Konsumenten.

Es ist seit langem bekannt, Lebensmittel zur Verlängerung der Haltbarkeit in gasdichten Verpackungen unter einer Schutzgasatmosphäre (auch "modifizierte Atmosphäre" genannt) zu lagern. Durch die Schutzgasatmosphäre werden mikrobiologische, enzymatische biochemische und negative physikalische Prozesse, die zum raschen Verderben der Waren führen, verlangsamt oder gar gestoppt. Üblicherweise kommen als Schutzgas dabei Gasgemische aus Kohlendioxid und Stickstoff zum Einsatz, wobei Kohlendioxid inhibierend auf das Wachstum von Mikroorganismen, wie Bakterien und Pilzen wirkt, während Stickstoff vorwiegend als Stützgas dient, um das Kollabieren der Verpackung zu verhindern. Darüber hinaus ist eine zusätzliche Kühllagerung bei einer Temperatur zwischen ca. 1°C und ca. 7°C hilfreich, um die Haltbarkeit der Lebensmittel zu verlängern.

In der DE 10 2006 000 625 A1 wird eine alternative Schutzgaszusammensetzung beschrieben, die insbesondere zum Haltbarmachen von Gemüse, Obst und Salaten vorgesehen ist. Das dort beschriebene Schutzgas besteht aus einem Vierkomponentengemisch, umfassend Anteile von Stickstoff, Sauerstoff, Kohlendioxid und Argon. Mit diesem Gemisch soll die Haltbarkeit dieser Produkte gegenüber konventionellen Schutzgasen aus einem Gemisch von Kohlendioxid und Stickstoff noch deutlich verlängert werden können.

Derartige Schutzgase eigenen sich gut zur Lagerung von pflanzlichen Produkten, wie beispielsweise Obst und Gemüse. Bei der Lagerung von Fleischprodukten oder Wurstwaren dagegen wird - auch bei Lagerung unter modifizierter Atmosphäre - einige Tage nach der Verpackung an der Oberfläche des Fleisches bzw. der Wurstwaren eine Verfärbung sichtbar, die sogenannte "Vergrauung". Die Ursache der Vergrauung ist nicht abschließend geklärt, jedoch ist zu vermuten, dass eine Reihe von Faktoren eine Rolle spielen, so zum Beispiel Lichteinfall, Verpackungsmaterial, Feuchtigkeit des Produkts oder die Zusammensetzung der das Produkt umgebenden Atmosphäre. Unbestreitbar ist jedoch, dass die Vergrauung eine Minderung insbesondere der optischen Qualität der Lebensmittel darstellt und einen äußerst negativen Einfluss auf die Kaufentscheidung des Kunden hat, selbst dann, wenn die Ware nach objektiven Kriterien bedenkenlos zu verzehren wäre.

Um die wertbestimmende rote Farbe von Fleisch und Fleischprodukten zu stabilisieren, kommen bei der Verpackung unter modifizierter Atmosphäre häufig Schutzgase zum Einsatz, die einen definierten Sauerstoffanteil aufweisen. Zwar ist bekannt, dass sich der Einfluss des Sauerstoffs bei den meisten Lebensmitteln, insbesondere solche pflanzlicher Herkunft, ungünstig auf die Qualität auswirkt, jedoch war man bislang auch der Ansicht, dass zur Erhaltung der roten Fleischfarbe möglichst viel Sauerstoff zur Schutzgasatmosphäre zugeführt werden müsse. Dabei geht man davon aus, dass sich bei Einsatz eines Schutzgases ohne Sauerstoff das Protein Myoglobin im Fleisch rasch und meistens unwiderruflich dunkel verfärbt und dadurch die optische Qualität der Ware vermindert wird. Eine sauerstoffangereicherte Schutzatmosphäre begünstigt zudem die Bildung von Oxymyoglobin, wodurch eine frisch und natürlich wirkende Fleischfarbe hervorgerufen wird. Ein Sauerstoffanteil im Schutzgas bei der Verpackung von Fleischwaren unter modifizierter Atmosphäre gilt im Stand der Technik daher als zwingend erforderlich, wie beispielsweise in den Druckschriften EP2 272 766 A1, EP1 935 789 B1 und EP1 595 794 A1 erwähnt; übliche Schutzgase für Fleisch bestehen beispielsweise aus einem Gemisch aus Sauerstoff und Kohlendioxid mit einem Sauerstoffanteil von 60-80 Vol.-%.

Fleisch- und Wurstwaren verlieren jedoch durch die Beigabe sauerstoffhaltiger Schutzgasgemischen rasch an Zartheit und Saftigkeit. Bei längerer Lagerung kommt es zu erhöhter Fettoxidation kommen, mit der Folge, dass das Fleischaroma abflacht und eine erhöhte Ranzigkeit auftritt. Der Sauerstoff führt zudem zu einem beschleunigten Wachstum von Mikroorganismen und somit zu einer Reduzierung der Haltbarkeitsdauer, ohne dass eine solche für den Konsumenten durch einen optisch wahrnehmbaren Verfall des Produkts erkennbar wäre. Somit besteht die Gefahr, dass die durch den Sauerstoffanteil im Schutzgas generierte, vermeintlich frische Fleischfarbe einen Qualitätszustand der Ware suggeriert, der tatsächlich nicht mehr vorhanden ist.

Es ist daher Aufgabe der vorliegenden Erfindung, ein Schutzgas zum Verpacken von Fleisch- oder Wurstwaren unter modifizierter Atmosphäre zu schaffen, das die Vergrauung der Fleisch- bzw. Wurstwaren unterdrückt und das zugleich eine hohe Haltbarkeitsdauer der verpackten Produkte gewährleistet.

Gelöst ist diese Aufgabe durch ein Schutzgas zum Verpacken von Fleisch oder Wurstwaren unter modifizierter Atmosphäre mit den Merkmalen des Patentanspruchs 1.

Das erfindungsgemäße Schutzgas zum Verpacken von Fleisch oder Wurstwaren ist sauerstofffrei und besteht aus einem Gasgemisch aus den drei Komponenten Argon, Kohlendioxid und Stickstoff mit den Anteilen 40 Vol.-% bis 80 Vol.-% Argon, 20 Vol.-% bis 40 Vol.-% Kohlendioxid, Rest Stickstoff.

Das im Schutzgas enthaltene Argon verdrängt den auf der Oberfläche der verpackten Fleisch- bzw. Wurstwaren noch anhaftenden Sauerstoff und verstärkt zudem die hemmende Wirkung des Kohlendioxids, die dieses auf Mikroorganismen ausübt. Zugleich werden die enzymatischen Reaktionen gehemmt, die in den Fleisch- bzw. Wurstwaren zum Vergrauen des Produkts führen. Insbesondere der Argonanteil im Schutzgas verhindert also die Vergrauung des Produkts und führt damit auch noch nach Tagen zu einem ansprechenden Äußeren der Ware, ohne dabei jedoch - wie dies bei der Zugabe von Sauerstoff der Fall ist - eine aus den oben genannten Gründen hochproblematische Rotfärbung des Fleisches zu generieren.

Der Kohlendioxidanteil sollte nicht unter 20 Vol.-% absinken, weil ansonsten die Unterdrückung der mikrobiologischen Aktivität nachlässt und somit die Haltbarkeitsdauer der Fleisch- bzw. Wurstwaren reduziert wird. Der Stickstoff wird im Wesentlichen als Stützgas zum Stabilisieren der Verpackung benötigt, und kann daher einen geringeren Anteil im Gasgemisch des Schutzgases haben, als jede der beiden anderen Komponenten.

Bevorzugt beträgt der Argonanteil über 60 Vol.-%, besonders bevorzugt über 70 Vol.-%. Die oben beschriebenen positiven Wirkungen des Argons steigern sich mit zunehmendem Argonanteil, jedoch sinkt mit abnehmendem Kohlendioxidanteil die hemmende Wirkung des Schutzgases auf die mikrobiologische Aktivität. Der Anteil des lediglich als Stützgas notwendigen Stickstoffs beträgt bevorzugt weniger als 10 Vol.-%, besonders bevorzugt weniger als 5 Vol.-%. Im Prinzip kann der Stickstoffanteil im Rahmen der Erfindung sehr gering gewählt werden, beispielsweise unter 1 Vol.-% bis hinab zu 0,1 Vol.-%, oder sogar ganz entfallen. Bevorzugt jedoch sollte der Stickstoffanteil nicht unter 3 Vol.-% absinken. Der Stickstoffanteil verhindert zusammen mit dem Argonanteil ein Kollabieren der Verpackung. Gute Ergebnisse lassen sich insbesondere mit einem Schutzgas mit 60 bis 70 Vol.-% Argon, 3 Vol.-% bis 10 Vol.-% Stickstoff, Rest Kohlendioxid erzielen.

Die Aufgabe der Erfindung wird auch durch ein Verfahren zum Verhindern der Vergrauung von Fleisch oder Wurstwaren gelöst, die in einer modifizierten Atmosphäre gelagert werden, wobei die modifizierte Atmosphäre aus einem erfindungsgemäßen Schutzgas besteht. Insbesondere besitzt die modifizierte Atmosphäre also die Zusammensetzung 40 Vol.-% bis 80 Vol.-% Argon, 20 Vol.-% bis 40 Vol.-% Kohlendioxid, Rest Stickstoff, wobei ein möglichst hoher Argonanteil (innerhalb des angegebenen Bereiches) ebenso vorteilhaft ist wie ein geringer Stickstoffanteil von unter 10 Vol.-%.

Die erfindungsgemäße Schutzgasatmosphäre verdrängt, insbesondere durch das darin enthaltende Argon, auf physikalischem Wege etwaig an der Oberfläche der Fleisch- und Wurstwaren anhaftenden Sauerstoff. Zugleich wird die Vergrauung der waren unterdrückt. Daher können die Waren lange gelagert werden, ohne dass es zu nennenswerten Einbußen des Geschmacks oder der Produktqualität kommt. Zudem lässt die aus dem erfindungsgemäßen Schutzgas gebildete modifizierte Atmosphäre die gelagerten Waren auch noch nach Tagen frisch und appetitlich erschienen. Die optische Qualität des verpackten Lebensmittels bleibt über Tage hinweg nahezu unverändert und die Haltbarkeitsdauer des Produkts wird verlängert. Dadurch wird insgesamt auch die Kosteneffizienz des Produkts gesteigert. Die erfindungsgemäße Schutzgasatmosphäre eignet sich insbesondere zum Lagern von Wurst, insbesondere Wurst-, Salami- oder Schinkenaufschnitt.

### Beispiel:

Wiener Wurst (Aufschnittswurst) wurde in gasdichten Verpackungen in einer Kühlraumatmosphäre mit einer Temperatur von 6°C und einer rel. Feuchte von 50% bei kontinuierlicher, Tageslicht entsprechender Beleuchtung gelagert. Als Schutzgas diente ein erfindungsgemäßes Gasgemisch (40 Vol.-% Argon, 30 Vol.-% Kohlendioxid und 30 Vol.-% Stickstoff). Als Vergleichsproben wurden gleichartige Verpackungen mit konventionellem Schutzgas (30 Vol.-% Kohlendioxid und 70 Vol.-% Stickstoff) sowie mit Luft hergestellt. Vier Tage nach der Verpackung zeigte sich bei den mit Luft als Schutzgas befüllten Vergleichsproben eine starke Vergrauung. Bei den mit konventionellem Schutzgas befüllten Vergleichsproben war ebenfalls eine deutlich sichtbare Vergrauung zu verzeichnen, die jedoch geringer ausfiel als die bei den Vergleichsproben mit Luft. Bei den mit dem erfindungsgemäßen Gasgemisch befüllten Proben zeigte sich dagegen auch vier Tage nach der Verpackung nahezu keine Vergrauung der Wurstoberfläche. Die Wurst behielt eine gute optische Qualität und einen angenehmen Geschmack.

## Patentansprüche

1. Schutzgas zum Verpacken von Fleisch oder Wurstwaren unter modifizierter Atmosphäre, bestehend aus 40 Vol.-% Argon bis 80 Vol.-% Argon, 20 Vol.-% bis 40 Vol.-% Kohlendioxid, Rest Stickstoff.

2. Schutzgas nach Anspruch 1, **dadurch gekennzeichnet, dass** der Argonanteil über 60 Vol.-%, bevorzugt über 70 Vol.-% beträgt.

3. Schutzgas nach Anspruch 1 oder 2, **dadurch gekennzeichnet, dass** der Stickstoffanteil weniger als 10 Vol.-%, bevorzugt weniger als 5 Vol.-% beträgt.

4. Schutzgas nach einem der vorhergehenden Ansprüche, **dadurch gekennzeichnet, dass** der Stickstoffanteil über 3 Vol.-% beträgt.

5. Verfahren zum Verhindern der Vergrauung von Fleisch oder Wurstwaren, die in einer modifizierten Atmosphäre gelagert werden, **dadurch gekennzeichnet, dass** die modifizierte Atmosphäre aus einem Schutzgas nach einem der vorhergehenden Ansprüche besteht.
